# EUROPEAN PATENT SPECIFICATION

(11) **EP 2 650 148 B1**
(45) Date of publication and mention of the grant of the patent: **20.03.2019**
(21) Application number: 12163900.9
(22) Date of filing: 12.04.2012
(51) Int. Cl.: B60D 1/54

(54) **A ball portion of a towing hook arrangement for a vehicle**
Kugelsegment einer Zughakenanordnung für ein Fahrzeug
Partie sphérique d'un agencement de crochet de remorquage d'un véhicule

(43) Date of publication of application: 16.10.2013
(73) Proprietor: Brink Towing Systems B.V., 7951 CX Staphorst (NL)
(72) Inventor: Eising, Frederik Jacob, 7951 CX Staphorst (NL); Borgonje, Christian Frans, 7951 CX Staphorst (NL)
(74) Representative: Valea AB

(56) References cited:
- EP-A1- 2 325 029
- DE-A1-102007 029 051
- DE-A1-102008 018 738
- DE-A1-102008 018 739
- DE-A1-102009 045 276
- DE-A1-102010 032 991
- US-B1- 6 991 247

## Description

### TECHNICAL FIELD

The present invention relates to a ball portion of a towing hook arrangement for a vehicle, and a towing hook comprising such ball portion. The ball portion can form a ball portion of a towing hook of a towing hook arrangement enabling the towing hook to be displaced between a towing position and a retracted position.

### BACKGROUND OF THE INVENTION

Towing hooks for towing e.g. trailers are commonly used today. In most cases a towing hook is mounted on the vehicle during the assembly process of the vehicle, although after sales mounting, e.g. by an authorized garage, is possible. For esthetical and practical reasons it may be desirable to have a towing hook which can be displaced between a towing position and a retracted position. Generally such towing hooks are referred to as retractable towing hooks.

There are several considerations when constructing a towing hook of the retractable kind. The available space in which a towing hook arrangement can be mounted on a vehicle varies between different manufactures and models. The rotation path, movement path or movement pattern, of the towing hook can further be very space consuming and impart restrictions on the configuration of the towing hook arrangement. The towing hook should further, when in the retracted position, not be visible or at least not be clearly visible so as not to affect the aesthetic appearance of the vehicle. It is also important that the towing hook can be retracted to a position in which it is subjected to no or low risk of being damaged by the ground on which the vehicle rests or travels over, or by loose objects from the ground such as dirt or rubble.

The restricted available space in a vehicle for mounting a towing hook arrangement imparts many restrictions to the manufacturer of the towing hook arrangements, as each towing hook arrangement has to be specifically adapted to each specific vehicle model. The path along which the towing hook travels during displacement between the towing position and the retracted position needs to be specifically adapted to fit each model of the vehicle.

An example of a retractable towing hook is disclosed in the European patent No. EP 1,894,752 B1. The towing hook in the mentioned patent projects from a bearing housing which forms the socket portion of a ball and socket joint. The towing hook has a ball portion forming the corresponding ball of the ball and socket joint. The ball and socket joint enables the towing hook to be displaced between a towing position, also referred to as the operative position, and a retracted position, also referred to as the inoperative position. A cam track which cooperates with a pinion arranged on a motor-driven axle effects displacement of the towing hook between the towing position and the retracted position. The cam track is arranged in a groove on the ball portion of the towing hook and defines a predetermined rotation path for the towing hook along which the towing hook can rotate between the towing position and the retracted position. A second rotating axle operates a lock to prevent the towing hook from rotating when in the towing position.

US 6,991,247 B1 discloses a tow bar for connecting a towed vehicle to a towing vehicle, the low bar comprising a towing vehicle connection mechanism connected to the towing - vehicle; a towed vehicle connection mechanism connected to the towed vehicle; and an interconnecting mechanism connecting the towing vehicle connection mechanism to the towed vehicle connection mechanism. The interconnecting mechanism defines an interconnection central point and an interconnection vertical axis spaced rearwardly from the interconnection central point. The interconnecting mechanism is structured to accommodate substantially all pitch and roll movements between the towing and towed vehicles at and about the interconnection central point, and to accommodate substantially all yaw movements between the towing and towed vehicles at and about the interconnection vertical axis.

### SUMMARY

A towing hook comprising a ball portion adapted for a ball and socket joint of a towing hook arrangement can be difficult to manufacture. One manufacturing aspect is tolerance; the ball portion needs to be manufactured with a low tolerance as otherwise a play can occur between the ball portion and the socket portion of the ball and socket joint. Due to the high stress that a towing hook is exposed to, an unintended play can cause severe wear on the components involved.

The above drawbacks are at least partly solved, or a useful alternative is provided, by a ball and socket joint for a towing hook arrangement according claim 1 enabling a towing hook of a vehicle to be displaced between a towing position and a retracted position after being mounted on the vehicle.

The ball portion of the towing hook can be adapted to different vehicles, or vehicle models, by replacing one or more of the components, or by configuring at least one of the components, e.g. by adding a suitable function or feature. The components can be manufactured using different materials to provide the ball portion of the towing hook with a desired property. It further enables the towing hook to be manufactured with a reduced weight, as the ball portion can be partly manufactured in a relatively light weight material such as a plastic-, or termo plastic, material, and partly with a steel component for example. The modularity enables easy adaptation to specific car models, by using the same first component and replacing/adapting second component.

According to an aspect, the peripheral surface of the ball portion comprises a slip surface adapted to cooperate with a corresponding surface of the socket portion of the ball and socket joint. At least parts of the slip surface can be formed by at least one of the first and the second components, optionally the slip surface can be formed by at least the first and the second components. Dependent on the configuration, one component can be provided with the slip surface, or optionally, one or more components can be provided with the slip surface. In case where one component provides for the slip surface, or where one or more components provides for the slip surface, the remaining component, or remaining components can be manufacturing in a material which do not need to be as rigid, or as stress tolerant, as the component(s) having the slip surface.

The peripheral surface of the ball portion can be formed by at least a first, a second and a third component. At least two components, at least three, at least four or at least five components can be used to form the ball portion of the towing hook.

The first component can be formed by a first material, and the second component can be formed by a second material, the first material being different from the second material. The first material can be a metal based material and the second material can be a non-metal based material.

The first material can be a strong material, while the second material can be a relatively weaker material optionally less rigid. The first material can be a high grade steel and the second material can be a low grade steel, or aluminium for example. Optionally the first material can be a high density material, approximately between 7-9 g/cm³, example of such materials are metals or metal based materials such as steel, wrought iron, carbon tool steel, cold drawn steel, carbon steel, pure iron, or similar materials. The second material can be a low density material, approximately 0,5-4 g/cm³, example of such materials are different plastics, thermoplastics or thermoset. Materials between 4-7 g/cm³ is considered to be middle range density materials. The material of the first component is selected dependent on the type of object intended to be towed, i.e. dependent on the expected level of forces which will imparted to the towing hook during towing.

The first or the second material can be a polymeric material, such as a thermoplastic material, such as polypropylene, polyethylene, polyurethane, ABS, or mixtures thereof. Advantageously the first material is steel, and the second material is a thermoplastic material, such as polypropylene, polyethylene, polyurethane, ABS, or mixtures thereof.

According to an aspect, the first and the second components each have a peripheral surface area, wherein the peripheral surface area of the first component is equal or larger than the peripheral surface area of the second component.

According to an aspect, a part of the first component partly or fully forms a towing hook. The first component can comprise a first and a second end, the first end of the first component forming a part of the ball portion and the second end of the first component forming a coupling portion for connection with a towable object.

According to an aspect, the ball portion is formed by at least a first, a second and a third component, wherein at least one of the second or third components have a substantially hemispherical form, optionally both the second and the third component has a substantially hemispherical form. The first component can be arranged between the second and the third components. By the term "substantially hemispherical form" is not meant a true hemispherical firm, but more the form of a cut hemispherical form, i.e. the first, second and third components are adapted to form a spherical ball portion together. However, in one embodiment, the second and third components have a true hemispherical form.

According to an aspect, at least the second component comprises at least one guiding groove. The guiding groove can be adapted to cooperate with a guiding pin for example. The guiding groove and the guiding pin being arranged to guide the ball portion along a predetermined path during displacement between the towing position and the retracted position. Dependent on the configuration, one component can be provided with the guiding groove, or optionally, one or more components can be provided with the guiding groove. If the guiding groove, or optionally guiding grooves if there is more than one, can be manufactured in a material not requiring a high stress tolerance, the component(s) can be manufactured in a material which do not need to be as rigid, durable, or as stress tolerant, as the first components) which is/are associated with that part of the towing hook to which the towable object is to be connected.

The guiding groove can be provided with a cam track, e.g. as a separate piece of material attached to the groove, or parts of the groove itself can advantageously be formed as a cam track. Such cam track can be adapted to cooperate with a pinion operated by an electrical motor for example.

The at least one guiding groove can be formed by at least a first and a second 10 component.

According to a second aspect, a towing hook comprises a first and a second end, the second end being adapted to be connected to a towable object, and the first end comprising a ball portion as described herein.

Optionally the second end of the towing hook is a component attached to the first end of the towing hook. The towing hook can be permanently attached to the first end of the towing hook e.g. by means of welding, or releaseably attached, e.g. via nuts, bolts or screws.

According to an aspect, the first end and the second end of the towing hook, and one of the first or second components of the ball portion are integrally formed in one unitary piece of material.

The components of the ball portion are distinct in terms of they are separate items attached together, and are thus not simply two portions of one single unitary piece of material.

In general terms, the ball portion is adapted to form a part of a ball and socket joint of a 30 towing hook arrangement for a vehicle. The towing hook can be displaced between a towing position and a retracted position when mounted on the vehicle. The ball portion is formed by at least a first and a second component.

### BRIEF DESCRIPTION OF THE DRAWINGS

Non-limiting embodiments of the present invention will be described in greater detail with reference to the accompanying figures in which;
figure 1 shows parts of the rear of a vehicle comprising a towing hook arrangement according to an embodiment, the towing hook being in the towing position;
figure 2 shows parts of the rear of a vehicle comprising the towing hook arrangement of figure 1, the towing hook positioned in the retracted position;
figure 3a shows the towing hook arrangement of figure 1 in greater detail;
figure 3b shows the towing hook arrangement of figure 1 in greater detail, the towing hook positioned in the retracted position;
figure 4a shows a towing hook having a ball portion;
figure 4b shows the towing hook of figure 4a in an exploded view;
figure 5a shows an embodiment of a towing hook having a ball portion according to one embodiment;
figure 5b shows the towing hook of figure 5a in an exploded view;
figure 6a shows the ball portion of the towing hook before displacement;
figure 6b shows the ball portion of the towing hook after displacement from the locked position to a release position at which the towing hook is permitted to rotate to a retracted position and;
figures 7a-7l show the towing hook and the push and pull arrangement with the towing hook in different positions and in three different views.

### DETAILED DESCRIPTION OF PREFERRED EMBODIMENTS

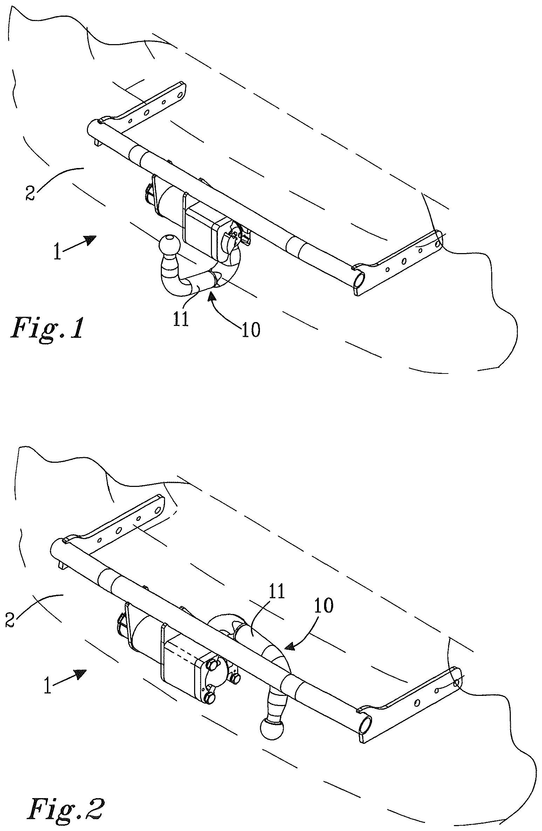

Figure 1 shows parts of a vehicle 1 and a towing hook arrangement 10 comprising a towing hook 11. The vehicle 1 is illustrated with parts of the rear of the vehicle 1 and specifically a bumper 2. For the sake of clarity, the rear of the vehicle has been illustrated with dashed lines and partly transparent. The towing hook 11, in the shown embodiment, can be displaced between a towing position, shown in figure 1, and a retracted position, shown in figure 2. In the towing position, the towing hook 11 is configured to be attached to a towable object in such a manner that the vehicle 1 can tow the towable object. In the retracted position, the towing hook 11 has been retracted to a position behind the bumper 2 of the vehicle 1 and is at least partly concealed from view by the bumper 2 of the vehicle 1. The towing hook 11 can be displaceable between the towing position and the retracted position via a ball and socket joint.

The towable object could be any object which is adapted to be temporarily mounted on a towing hook, such as a trailer, a caravan, a bike carrier, a luggage carrier, or similar. The towing position is a position in which a towable object can be towed behind the vehicle and the retracted position is generally a position in which the towing hook has been displaced from the towing position, e.g. to a position behind the bumper of the vehicle. Instead of being displaced to a retracted position, the towing hook can be displaced to a second position.

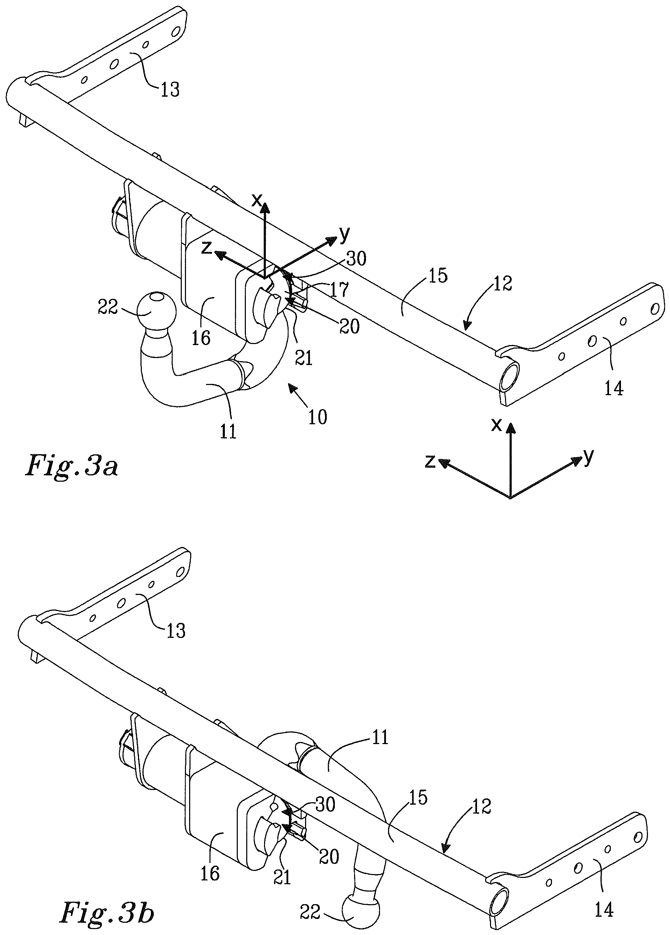

Figure 3a shows the towing hook arrangement 10 comprising an attachment arrangement 12 to attach the towing hook arrangement 10 to the vehicle. Figure 3b shows the embodiment of figure 3a but with the towing hook 11 in the retracted position. The attachment arrangement 12 can be adapted to fit substantially any vehicle, in the shown embodiment, the attachment arrangement 12 is adapted to be mounted to the chassis of a car such as a SUV. The attachment arrangement 12 is formed by two mounting brackets 13, 14 and a bar 15 extending there between. Attached to the bar 15 of the attachment arrangement 12 is a housing 16 which is adapted to at least partly form, or to encompass, the ball and socket joint of the towing hook 11.

The towing hook 11 comprises a ball portion 20 forming a part of the ball and socket joint 30 enabling the towing hook 11 to pivot, or rotate, between different positions. As is noted, the housing 16 does not need to fully enclose the ball portion 20 of the towing hook 11. The housing 16 comprises at least one opening 17 extending through the wall of the housing 16. The opening 17 permits the towing hook 11 to extend out from the socket portion partly formed by the housing 16 and further permits it to rotate to the desired position. The housing 16 can be formed in one unitary piece of material, or be formed by components attached together, as in the shown embodiment in figure 3a.

According to an aspect, the opening 17 can be configured to permit the towing hook 11 to be displaced between the towing position and the retracted position. Optionally the opening 17 of the housing 16 has an extension enabling the towing hook 11 to be rotated more than 140 degrees, optionally more than 160 degrees about at least one axis of rotation. In the shown embodiment, the opening 17 of the housing 16 has an extension enabling the towing hook 11 to be rotated to an upside down position, as seen in figure 2 and 3b.

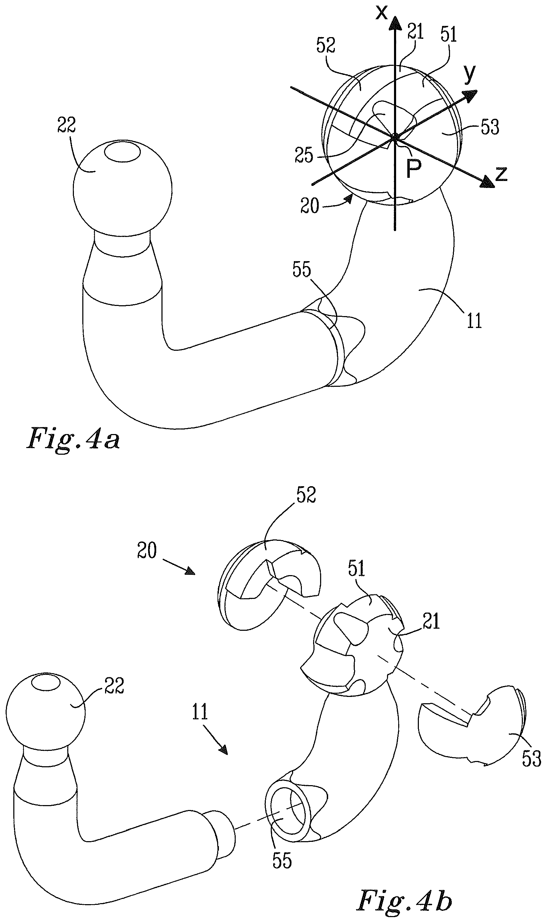

As illustrated in figure 4a, the ball portion 20 has a point of rotation P, centrally positioned in said ball portion 20, about which the ball portion 20 can rotate. In the shown embodiments, the ball portion 20 has a limited number of axes of rotation about which the ball portion can rotate at one time. In the shown embodiment, the towing hook 11 is prevented from rotating freely in arbitrary directions about the point of rotation P; instead it rotates about a predetermined path as will be described in greater detail herein.

For the purpose of orientation, the following axes of rotation will be used herein. X axis, corresponding to the height direction of the vehicle 1, the Y axis corresponding to the longitudinal extension of the vehicle, and the Z axis, corresponding to the transverse extension of the vehicle. The extensions of the vehicle 1 are to be understood as when the vehicle 1 is in a ready to use state. In this sense the height direction of the vehicle 1 and the X axis can also be referred to as a vertical axis. The X, Y and Z axes are perpendicular to each other and intersect at an origin. As described herein, the origin is the point of rotation P. In some drawings the X, Y and Z axes are illustrated at the side of the ball portion 20 of the towing hook and the point of rotation P for the sake of clarity, however, the point of rotation P and the origin of the X, Y and Z axes are still considered to be in the center of the ball portion.

The ball portion 20 of the towing hook 11 has a modular configuration, i.e. the ball portion of the towing hook 11 is assembled by at least a first and a second component. When manufacturing the ball portion 20 of the towing hook 11, the ball portion 20 is assembled by components which enable a manufacturer to allocate different properties or functions to the ball portion, and more importantly to different portions, or sections, of the ball portion of the towing hook. Such properties, or functions, can be by way of example only; adapting the form of the ball portion; providing specific functions to specific sections or parts of the ball portion; and/or providing specific material properties to the ball portion, just to mention a few.

It should be noted that even if a ball portion comprises separate components inside of the ball portion, such component does not form the ball portion. The components of the ball portion defined herein forms a part of the peripheral surface of the ball portion, and is thus adapted to cooperate with the socket portion of the ball and socket joint.

The towing hook 11 has a first and a second end 21, 22 in which the first end 21 is substantially formed by the ball portion 20, and the second end 22 is adapted to be attached to the towable object. In the shown embodiment, the second end 22 of the towing hook 11 comprises a towing ball adapted to form a ball and socket joint with the towable object, the socket being a socket portion on a trailer for example.

In figure 4a, the ball portion 20 is assembled from a plurality of components, in the shown embodiment, three components 51, 52, 53. Figure 4b shows an exploded view of the embodiment shown in figure 4a. The first component 51 is manufactured in the same material as the second end 22 of the towing hook 11, and connected thereto via a connection 55, although second end 22 of the towing hook 11 and the first component 51 can be formed in one unitary piece of material. The second and third components 52, 53 can be manufactured in other materials than the first component 51. In the shown embodiment, the first component 51 is manufactured in steel, and the second and third components are manufactured using a thermoplastic material. The first component is thus very rigid and durable as it is intended to withstand the load of the towable object during towing, while the second and third components 52, 53 are not very durable or rigid in this context.

Different materials in different sections of the ball portion 20 can be desirable. If the ball portion 20 is to be provided with self lubricating properties, the second and third components can be provided with a self lubricating coating for example. A self lubricating coating is described in the publication WO 2011/015531. The material of the second and third component can thus be selected so as to be compliant with the self lubricating coating. The material of the second and third components 52, 53 can thus be adapted to the self lubricating coating without departing from the strict safety requirements of towing hooks and towing hook arrangements. In the mentioned case, the first component 51 can be manufactured in steel and used as the part of the ball portion 20 which carries the weight of the towable object, i.e. that part which is subjected to the different forces which a towing hook can be subjected to when towing.

Optionally, or additionally, as seen in figure 4a, the first component 51 can comprise at least one groove 25 adapted to cooperate with a lock protrusion to prevent the towing hook 11 from rotating after the towing hook 11 has been positioned in a locked position, such as the towing position.

In one embodiment, the towing hook 11 is enabled to be displaced along a predetermined path between a first and a second position, in the mentioned case between a towing position and a retracted position.

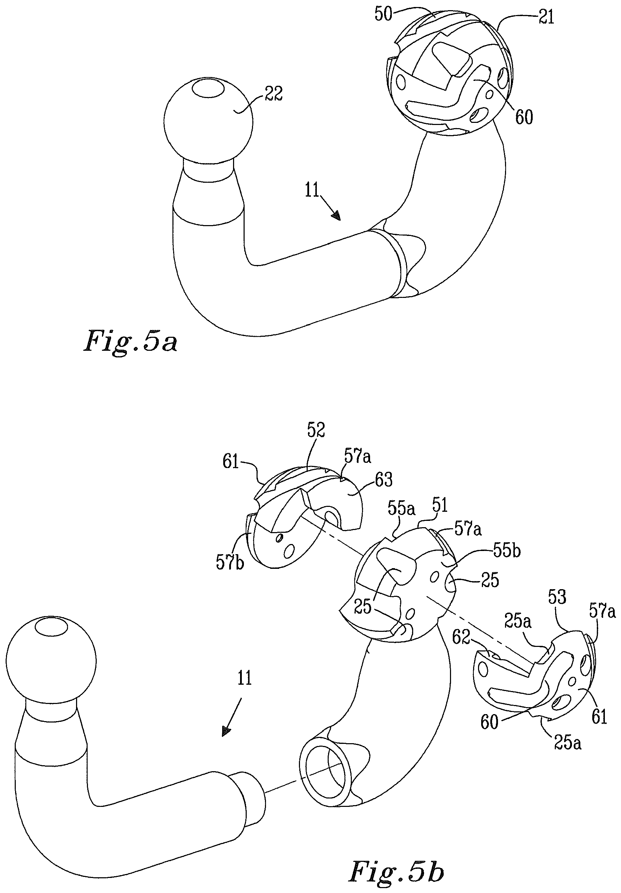

Figure 5a shows an embodiment of a towing hook 11 comprising a first and a second end 21, 22. The first end 21 of the towing hook 11 comprises a ball portion 20 adapted to be connected with a socket forming a ball and socket joint, to enable the towing hook 11 to be displaced between a towing position and a second position, such as a second towing position, a retracted position or an inoperable position.

The ball portion 20 can be provided with a guiding groove 60 which cooperates with a guiding pin (not shown in figure 5a) to guide the towing hook 11 during the displacement along a predetermined path defined by the extension of the guiding groove 60.

As mentioned, the ball portion 20 is formed by a first, second and third component 51, 52, 53, however two, three, four, five components or more are possible. In figure 5b, the first, the second and the third components 51, 52, 53 are shown in an exploded view. In the shown embodiment of figure 5b, the third component 53 comprises a groove 60, adapted to cooperate with a guiding pin (not shown) to guide the towing hook 11 along a predetermined path during the rotational displacement.

An advantage of manufacturing the ball portion using components is that one or more of the components can easily be provided with a desired feature, such feature could be a guiding groove for a guiding pin, like the guiding groove 60 of the third component 53 shown in figure 5b for example. Other optional, or additional, features could be guiding portions, sensors, position indicators e.g. electronic or mechanical, wear indicators or the like. Active sensors, i.e. sensors requiring their own power source can be used; and/or passive sensors, i.e. sensors not requiring their own power source are possible.

The form or shape of the components can vary, although at least two of the components have to be able to form parts of a ball portion adapted to cooperate with a socket, to enable a ball and socket joint connection. In the embodiment shown in figure 5b, the first component 51 has a substantially disc shaped form, while the second and third component 52, 53 each have a portion with a substantially hemispherical form; a hemispherical portion 61. In figure 5b, the second and the third components 52, 53 also comprise a protruding portion 62, 63 which extends across a portion of the first component 51. Parts of the second and the third components 52, 53 can thus extend across a portion of the first component 51, or optionally into the first component 51. The first component 51 has a first contact surface 55a adapted to be adjacent the second component 52 and a second contact surface 55b adapted to be adjacent the third component 53. It is possible that the first and the third components 51, 53 are contacting each other, although the area of such a contact surface tends to be small.

The guiding groove 60 of the third component 51 extends along a portion of the substantially hemispherical portion 61 of the third component 53, and along a portion of the protruding portion 62 of the third component 53.

The components 51, 52, 53 can be attached together by mechanical means, e.g. by screws, bolts, pins or the like, chemical means, e.g. by binding agents, or the like, or by thermal bonding, e.g. welding or melting, parts or sections of the components together. Combinations of these attachments options are of course possible. In figures 5a-5b, the second and the third components 52, 53 are attached to the first component 51 by screws (not shown).

The ball portion 20 of the towing hook 11 comprises, as mentioned above, at least one groove 25, in the shown embodiment in figure 5b; three grooves 25. The grooves 25 are adapted to receive protrusions, e.g. arranged on the housing 16, in an engaging manner to prevent the towing hook 11 from rotating when positioned in the towing position. The grooves 25 can thus be considered to be locking grooves. In the position shown in figure 5b, the ball portion 20 of the towing hook 11 is in a locked position. In the locked position, the towing hook 11 is prevented from rotation about at least one axis, the locked position is thus advantageously a towing position. As is noticed in figure 5b, also the third component 53 comprises groove portions 25a which are adapted to form parts of the grooves 25. The groove portions 25a do not have the function of preventing the towing hook 11 from rotating but serve the purpose to guide the corresponding protrusions which the grooves 25 are adapted to engage during mating. Having a modular ball portion thus also enables the grooves 25 to be slightly modified via the groove portions 25a of the third component 53 to be adapted in a very flexible way to any specific vehicle model or type.

Generally, it is possible that the ball portion is displaced with respect to the socket portion. Optionally, or additionally, it is possible that the ball portion and the socket portion of the ball and socket joint are both displaced with respect to the housing. In both the mentioned cases, the point of rotation P of the ball portion of the towing hook is displaced. The displacement of the ball portion can be done by a push and/or pull arrangement for example. Dependent on the configuration of the push and/or pull arrangement, the ball portion 20 of the towing hook 11 can be needed to be configured differently. Using a modular ball portion, like the one described above, enables the ball portion to be specifically adapted to cooperate with a large variety of different push and/or pull arrangements to displace the ball portion of the towing hook. The ball portion can be adapted simply by replacing one or more of the components, or by re-shaping existing components.

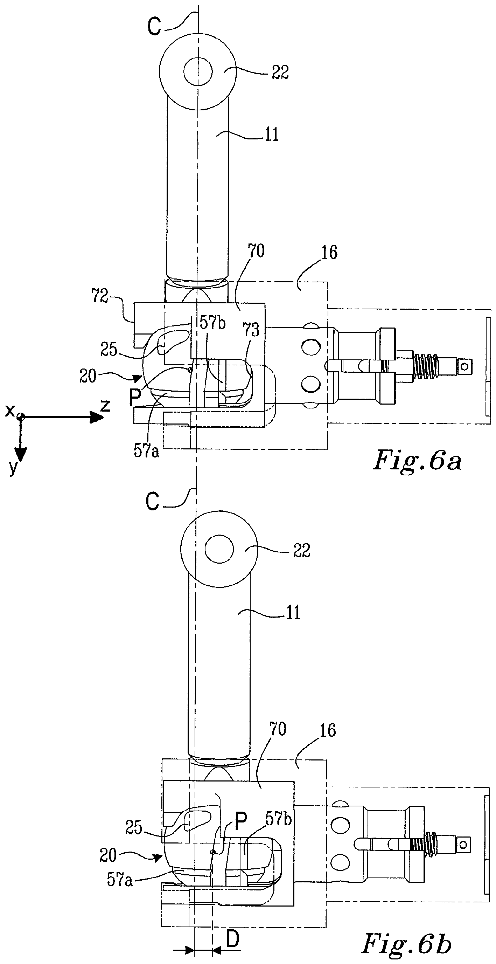

In an embodiment, the ball portion 20 of the towing hook 11 can be displaced as mentioned above; more specifically the point of rotation P of the ball portion 20 of the towing hook 11 can be displaced, as shown in figures 6a-6b. This enables the ball portion 20 to move from a locked position in which it is prevented from rotating about the point of rotation P, to a release position, in which it is permitted to rotate about the point of rotation P.

To enable the towing hook 11 to rotate with respect to the housing 16, the point of rotation P of the ball portion 20 of the towing hook 11 can be displaced with respect to the housing 16. When the ball portion 20 of the towing hook 11 is displaced to the release position, a lock function is disabled, e.g. by disabling a lock mechanism by the relative displacement of the ball portion 20 of the towing hook 11 with respect to the housing 16. In the embodiment shown in figure 6a, the lock mechanism is partly formed by three protrusions (not shown), extending from the housing 16 towards the interior of the housing 16 and adapted to engage the grooves 25 of the ball portion 20 of the towing hook 11. Although three protrusions are mentioned; one, two, three, four, five, six or more protrusions are feasible and thus of course a corresponding number of grooves 25 on the ball portion 20 of the towing hook 11. The housing 16 in figures 6a-6b is illustrated with dashed lines to visualize the ball portion displacement arrangement, more specifically referred to as a push and pull arrangement 70.

A first and a second Indent 57a, 57b, having a circular extension extending substantially around the periphery of the ball portion 20, cooperates with the push and pull arrangement 70 to retain the ball portion 20 of the towing hook 11 from displacement. As is noted in figure 5b, the first indent 57a extends across the first, the second and the third components 51, 52, 53. The second indent 57b is fully formed by one of the components, in this case the second component 52, as can be seen in figure 5b. A modular ball portion using components can thus easily be adapted to different kinds of displacement mechanisms.

Figures 6a-6b show the housing 16 and the towing hook 11 as seen from above with a view along the X axis. To visualize the displacement of the ball portion 20, a center line C which extends parallel with the Y-axis is shown in figures 6a and 6b. The towing hook 11 is translated along the Z axis during the displacement of the point of rotation P of the ball portion 20. It should be noted that in other embodiments, the point of rotation P of the ball portion 20 of the towing hook 11 could be displaced along the X- or Y axis, or along one or more of the Z-, X-, and Y axes. As is indicated in figure 6b, the point of rotation P is displaced a distance D, which can be more than 2 mm, optionally 2-50 mm, optionally 3¬40 mm, preferably 4-35 mm. The point of rotation P of the ball portion 20 of the towing hook 11 is advantageously displaced a distance sufficient for a lock function, or a lock mechanism, to be disabled, e.g. for a protrusion to disengage the grooves 25.

The push and pull arrangement 70 comprises a grip portion 72 which is adapted to interact with the ball portion 20 of the towing hook 11 to enable pulling of the ball portion 20 of the towing hook 11. In the embodiment shown in figures 6a-6b, the grip portion 72 of push and pull arrangement 70 is configured to partly encompass the ball portion 20 of the towing hook 11 and to pull the ball portion 20 and thus displace the point of rotation P of the ball portion 20. The grip portion 72 of the push and pull arrangement 70 is arranged in working cooperation with a push portion 73. The grip portion 72 and the push portion 73 of the push and pull arrangement 70 can be formed by a unitary piece of material as shown in figures 6a-6b, or be formed by components attached together.

It is conceivable that the push and pull portions 72, 73 of the push and pull arrangement 70 are operated by completely separate mechanisms, i.e. operated independently with respect to each other, or as shown in figures 6a-6b operated by one main mechanism.

In one embodiment, the point of rotation P of the ball portion 20 is displaced while parts of the towing hook 11 are not displaced, or at least not displaced to the same extent as the ball portion 20 of the towing hook 11. The latter can be implemented by simultaneously, or substantially simultaneously, rotating the towing hook 11 while laterally displacing the point of rotation P of the ball portion 20 of the towing hook 11. As an example with reference to figure 6a; the towing ball 22 could still be intersecting the center line C, while the point of rotation P has been displaced a distance D as shown in figure 6b.

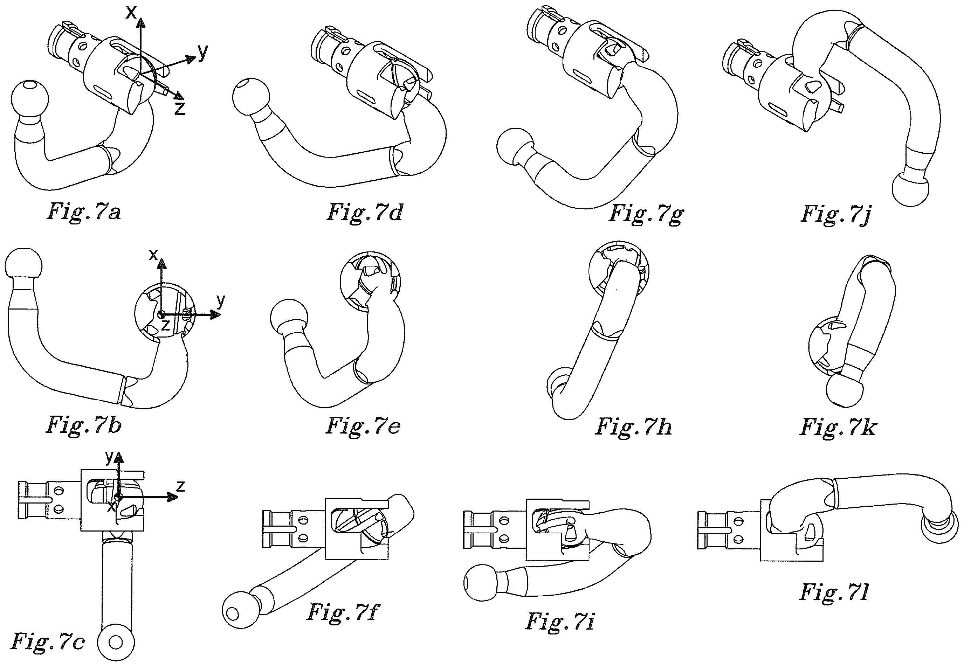

Figures 7a-7l show parts of the push and pull arrangement 70 and the towing hook 11 in three different perspectives; first perspective 7a, 7d, 7g, 7j, second perspective 7b, 7e, 7h, 7k and third perspective 7c, 7f, 7i, 71. The second perspective is illustrated with a view along the Z axis, and the third perspective along the X axis. Each perspective is further illustrated with the towing hook 11 in four different positions; position one; 7a; 7b; 7c; position two; 7d; 7e; 7f; position three; 7g; 7h; 7i and; position four; 7j; 7k; 71. In the first position 7a, 7b, 7c, the towing hook 11 is in the towing position, and in the fourth position 7j, 7k, 71, the towing hook 11 is in the retracted position. The second and third positions are intermediate positions which show the towing hook in two separate positions as the towing hook 11 is displaced between the towing position and the retracted position.

## Claims

1. A ball and socket joint (30) for a towing hook arrangement (10), the ball and socket joint (30) enabling a towing hook (11) of a vehicle to be displaced between a towing position and a retracted position when the towing hook arrangement (10) is mounted on said vehicle, the ball and socket joint (30) comprising a ball portion (20) and a socket portion, said ball portion (20) having a peripheral surface, wherein at least a part of said peripheral surface of said ball portion (20) is formed by at least a first and a second component (51, 52, 53), wherein the at least first and second component (51, 52, 53) are attached together to form said ball portion (20) of the towing hook (11), said ball portion (20) being **characterized in that** it comprises at least one groove (25) adapted to receive at least one protrusion of a locking mechanism in an engaging manner to prevent the towing hook (11) from rotating when positioned in a towing position.

2. The ball and socket joint (30) according to claim 1, wherein said peripheral surface of said ball portion (20) comprises a slip surface adapted to cooperate with a corresponding surface of said socket portion of said ball and socket joint (30), and in that said slip surface is formed by at least one of said first and said second components (51, 52, 53).

3. The ball and socket joint (30) according to claim 1 or 2, wherein said peripheral surface of said ball portion (20) is formed by at least a first, a second and a third component (51, 52, 53).

4. The ball and socket joint (30) according to any of the claims 1-3, wherein said first component (51) is formed by a first material, and said second component (52, 53) is formed by a second material, said first material being different from said second material.

5. The ball and socket joint (30) according to claim 4, wherein said first or said second material is a polymeric material, such as a thermoplastic material, such as polypropylene, polyethylene, polyurethane, ABS, or mixtures thereof.

6. The ball and socket joint (30) according to any of the preceding claims, wherein said first and said second components (51, 52, 53) each have a peripheral surface area forming a part of said peripheral surface of said ball portion (20), and wherein said peripheral surface area of said first component (51) is equal or larger than said peripheral surface area of said second component (52, 53).

7. The ball and socket joint (30) according to any of the preceding claims, wherein a part of said first component (51) forms a part of a towing hook (11).

8. The ball and socket joint (30) according to claim 7, wherein said first component (51) comprises a first and a second end (21, 22), said first end (21) of said first component (51) forming a part of said ball portion (20) and said second end (22) of said first component (51) forms a coupling portion for connection with a towable object.

9. The ball and socket joint (30) according to any of the preceding claims, wherein said ball portion (20) is formed by at least a first, a second and a third component (51, 52, 53), wherein at least one of said second or third components (52, 53) have a substantially hemispherical form, and wherein said first component (51) is arranged between said second and said third components (52, 53).

10. The ball and socket joint (30) according to any of the preceding claims, wherein at least said second component (52, 53) comprises at least one guiding groove (60) adapted to cooperate with a guiding pin, said guiding groove (60) and said guiding pin being arranged to guide said ball portion (20) in a predetermined path during displacement between said towing position and said retracted position.

11. The ball and socket joint (30) according to claim 10, wherein said at least one guiding groove (60) is formed by at least said first and said second component (51, 52, 53).

12. A towing hook (11) wherein said towing hook (11) comprises a first and a second end (21, 22), said second end (22) being adapted to be connected to a towable object, and said first end (21) comprising said ball portion (20) of the ball and socket joint (30) according to any of the claims 1-11.

13. The towing hook (11) according to claim 12, wherein said second end (22) of said towing hook (11) is a component attached to said first end (21) of said towing hook (11).

14. The towing hook (11) according to claim 13, wherein said second end (22) is attached to said first end (21) of said towing hook (11) with a permanent attachment, such as welding, or a detachable attachment, such as nuts and bolts.

15. The towing hook (11) according to claim 12, wherein said second end (22) of said towing hook (11), and one of said first or said second component (51) of said ball portion (20) are integrally formed in one unitary piece of material.

## Patentansprüche

1. Kugel-und-Fassung-Gelenk (30) für eine Zughakenanordnung (10), wobei das Kugel-und-Fassung-Gelenk (30) einem Zughaken (11) eines Fahrzeugs ermöglicht, zwischen einer Zugposition und einer zurückgezogenen Position verlagert zu werden, wenn die Zughakenanordnung (10) an dem Fahrzeug montiert ist, wobei das Kugel-und-Fassung-Gelenk (30) einen Kugelabschnitt (20) und einen Fassungsabschnitt umfasst, wobei der Kugelabschnitt (20) eine Randoberfläche aufweist, wobei mindestens ein Teil der Randoberfläche des Kugelabschnitts (20) durch mindestens eine erste und eine zweite Komponente (51, 52, 53) gebildet ist, wobei die mindestens erste und zweite Komponente (51, 52, 53) aneinander angebracht sind, um den Kugelabschnitt (20) des Zughakens (11) zu bilden, wobei der Kugelabschnitt (20) **dadurch gekennzeichnet ist, dass** er mindestens eine Nut (25) umfasst, die dafür angepasst ist, mindestens einen Vorsprung eines Verriegelungsmechanismus in einer eingreifenden Weise zu empfangen, um den Zughaken (11) am Rotieren zu hindern, wenn er in einer Zugposition positioniert ist.

2. Kugel-und-Fassung-Gelenk (30) nach Anspruch 1, wobei die Randoberfläche des Kugelabschnitts (20) eine Gleitoberfläche umfasst, die dafür angepasst ist, mit einer entsprechenden Oberfläche des Fassungsabschnitts des Kugel-und-Fassung-Gelenks (30) zusammenzuwirken und bei der die Gleitoberfläche durch mindestens eine der ersten und der zweiten Komponenten (51, 52, 53) gebildet ist.

3. Kugel-und-Fassung-Gelenk (30) nach Anspruch 1 oder 2, wobei die Randoberfläche des Kugelabschnitts (20) durch mindestens eine erste, eine zweite und eine dritte Komponente (51, 52, 53) gebildet ist.

4. Kugel-und-Fassung-Gelenk (30) nach einem der Ansprüche 1-3, wobei die erste Komponente (51) durch ein erstes Material gebildet ist und die zweite Komponente (52, 53) durch ein zweites Material gebildet ist, wobei sich das erste Material von dem zweiten Material unterscheidet.

5. Kugel-und-Fassung-Gelenk (30) nach Anspruch 4, wobei das erste oder das zweite Material ein Polymermaterial ist, wie beispielsweise ein thermoplastisches Material, wie beispielsweise Polypropylen, Polyethylen, Polyurethan, ABS oder Mischungen davon.

6. Kugel-und-Fassung-Gelenk (30) nach einem der vorstehenden Ansprüche, wobei die ersten und zweiten Komponenten (51, 52, 53) jeweils eine Randoberflächenfläche aufweisen, die einen Teil der Randoberfläche des Kugelabschnitts (20) bildet, und wobei die Randoberflächenfläche der ersten Komponente (51) gleich der oder größer als die Randoberflächenfläche der zweiten Komponente (52, 53) ist.

7. Kugel-und-Fassung-Gelenk (30) nach einem der vorstehenden Ansprüche, wobei ein Teil der ersten Komponente (51) einen Teil eines Zughakens (11) bildet.

8. Kugel-und-Fassung-Gelenk (30) nach Anspruch 7, wobei die erste Komponente (51) ein erstes und ein zweites Ende (21, 22) umfasst, wobei das erste Ende (21) der ersten Komponente (51) einen Teil des Kugelabschnitts (20) bildet und das zweite Ende (22) der ersten Komponente (51) einen Kupplungsabschnitt zur Verbindung mit einem ziehbaren Gegenstand bildet.

9. Kugel-und-Fassung-Gelenk (30) nach einem der vorstehenden Ansprüche, wobei der Kugelabschnitt (20) durch mindestens eine erste, eine zweite und eine dritte Komponente (51, 52, 53) gebildet ist, wobei mindestens eine der zweiten oder dritten Komponenten (52, 53) eine im Wesentlichen halbsphärische Form aufweist, und wobei die erste Komponente (51) zwischen den zweiten und den dritten Komponenten (52, 53) angeordnet ist.

10. Kugel-und-Fassung-Gelenk (30) nach einem der vorstehenden Ansprüche, wobei mindestens die zweite Komponente (52, 53) mindestens eine Führungsnut (60) umfasst, die dafür angepasst ist, mit einem Führungsstift zusammenzuwirken, wobei die Führungsnut (60) und der Führungsstift dafür angeordnet sind, den Kugelabschnitt (20) auf einem vorbestimmten Weg während Verlagerung zwischen der Zugposition und der zurückgezogenen Position zu führen.

11. Kugel-und-Fassung-Gelenk (30) nach Anspruch 10, wobei die mindestens eine Führungsnut (60) durch mindestens die erste und die zweite Komponente (51, 52, 53) gebildet ist.

12. Zughaken (11), wobei der Zughaken (11) ein erstes und ein zweites Ende (21, 22) umfasst, wobei das zweite Ende (22) dafür angepasst ist, mit einem ziehbaren Objekt verbunden zu werden, und das erste Ende (21) den Kugelabschnitt (20) des Kugel-und-Fassung-Gelenks (30) nach einem der Ansprüche 1-11 umfasst.

13. Zughaken (11) nach Anspruch 12, wobei das zweite Ende (22) des Zughakens (11) eine Komponente ist, die an dem ersten Ende (21) des Zughakens (11) angebracht ist.

14. Zughaken (11) nach Anspruch 13, wobei das zweite Ende (22) an dem ersten Ende (21) des Zughakens (11) mit einer dauerhaften Anbringung, wie beispielsweise Schweißen, oder einer lösbaren Anbringung, wie beispielsweise Muttern und Bolzen, angebracht ist.

15. Zughaken (11) nach Anspruch 12, wobei das zweite Ende (22) des Zughakens (11) und eine der ersten oder der zweiten Komponente (51) des Kugelabschnitts (20) in einem einheitlichen Stück Material integral gebildet sind.

## Revendications

1. Joint à rotule (30) pour un agencement de crochet de remorquage (10), le joint à rotule (30) permettant à un crochet de remorquage (11) d'un véhicule d'être déplacé entre une position de remorquage et une position rétractée lorsque l'agencement de crochet de remorquage (10) est monté sur ledit véhicule, le joint à rotule (30) comprenant une portion de bille (20) et une portion de douille, ladite portion de bille (20) présentant une surface périphérique, dans lequel au moins une partie de ladite surface périphérique de ladite portion de bille (20) est formée par au moins un premier et un deuxième composant (51, 52, 53), dans lequel les au moins premier et deuxième composants (51, 52, 53) sont attachés ensemble pour former ladite portion de bille (20) du crochet de remorquage (11), ladite portion de bille (20) étant **caractérisée en ce qu'**elle comprend au moins une rainure (25) adaptée pour recevoir au moins une saillie d'un mécanisme de verrouillage par mise en prise pour empêcher le crochet de remorquage (11) d'être tourné lorsqu'il est positionné dans une position de remorquage.

2. Joint à rotule (30) selon la revendication 1, dans lequel ladite surface périphérique de ladite portion de bille (20) comprend une surface de glissement adaptée pour coopérer avec une surface correspondante de ladite portion de douille dudit joint à rotule (30), et en ce que ladite surface de glissement est formée par au moins un dudit premier et dudit deuxième composant (51, 52, 53).

3. Joint à rotule (30) selon la revendication 1 ou 2, dans lequel ladite surface périphérique de ladite portion de bille (20) est formée par au moins un premier, un deuxième et un troisième composant (51, 52, 53).

4. Joint à rotule (30) selon l'une quelconque des revendications 1 à 3, dans lequel ledit premier composant (51) est formé par un premier matériau, et ledit deuxième composant (52, 53) est formé par un second matériau, ledit premier matériau étant différent dudit second matériau.

5. Joint à rotule (30) selon la revendication 4, dans lequel ledit premier ou ledit second matériau est un matériau de polymère tel qu'un matériau thermoplastique, tel qu'un polypropylène, polyéthylène, polyuréthane, ABS, ou des mélanges de ceux-ci.

6. Joint à rotule (30) selon l'une quelconque des revendications précédentes, dans lequel ledit premier et ledit deuxième composant (51, 52, 53) présentent chacun une zone de surface périphérique formant une partie de ladite surface périphérique de ladite portion de bille (20), et dans lequel ladite zone de surface périphérique dudit premier composant (51) est égale ou plus grande que ladite zone de surface périphérique dudit deuxième composant (52, 53).

7. Joint à rotule (30) selon l'une quelconque des revendications précédentes, dans lequel une partie dudit premier composant (51) forme une partie d'un crochet de remorquage (11).

8. Joint à rotule (30) selon la revendication 7, dans lequel ledit premier composant (51) comprend une première et une seconde extrémité (21, 22), ladite première extrémité (21) dudit premier composant (51) formant une partie de ladite portion de bille (20) et ladite seconde extrémité (22) dudit premier composant (51) forme une portion de couplage pour le raccordement avec un objet remorquable.

9. Joint à rotule (30) selon l'une quelconque des revendications précédentes, dans lequel ladite portion de bille (20) est formée par au moins un premier, un deuxième et un troisième composant (51, 52, 53), dans lequel au moins un desdits deuxième ou troisième composants (52, 53) présente une forme sensiblement hémisphérique, et dans lequel ledit premier composant (51) est agencé entre ledit deuxième et ledit troisième composant (52, 53).

10. Joint à rotule (30) selon l'une quelconque des revendications précédentes, dans lequel au moins ledit deuxième composant (52, 53) comprend au moins une rainure de guidage (60) adaptée pour coopérer avec une broche de guidage, ladite rainure de guidage (60) et ladite broche de guidage étant agencées pour guider ladite portion de bille (20) dans une voie prédéterminée pendant le déplacement entre ladite position de remorquage et ladite position rétractée.

11. Joint à rotule (30) selon la revendication 10, dans lequel ladite au moins une rainure de guidage (60) est formée par au moins ledit premier et ledit deuxième composant (51, 52, 53).

12. Crochet de remorquage (11), dans lequel ledit crochet de remorquage (11) comprend une première et une seconde extrémité (21, 22), ladite seconde extrémité (22) étant adaptée pour être raccordée à un objet remorquable, et ladite première extrémité (21) comprenant ladite portion de bille (20) dudit joint à rotule (30) selon l'une quelconque des revendications 1 à 11.

13. Crochet de remorquage (11) selon la revendication 12, dans lequel ladite seconde extrémité (22) dudit crochet de remorquage (11) est un composant attaché à ladite première extrémité (21) dudit crochet de remorquage (11).

14. Crochet de remorquage (11) selon la revendication 13, dans lequel ladite seconde extrémité (22) est attachée à ladite première extrémité (21) dudit crochet de remorquage (11) avec une attache permanente, telle que le soudage, ou une attache détachable, telle que des écrous et boulons.

15. Crochet de remorquage (11) selon la revendication 12, dans lequel ladite seconde extrémité (22) dudit crochet de remorquage (11), et l'un dudit premier ou dudit deuxième composant (51) de ladite portion de bille (20) sont formés d'un seul tenant dans une pièce de matériau unitaire.
